# EUROPEAN PATENT SPECIFICATION

(11) **EP 3 335 945 B1**
(45) Date of publication and mention of the grant of the patent: **17.06.2020**
(21) Application number: 16461575.9
(22) Date of filing: 15.12.2016
(51) Int. Cl.: B60S 1/38

(54) **END FITTING FOR A WIPER BLADE AND A WIPER BLADE COMPRISING SUCH THE END FITTING**
ENDSTÜCK FÜR EIN WISCHERBLATT UND WISCHERBLATT MIT EINEM DERARTIGEN ENDSTÜCK
RACCORD D'EXTRÉMITÉ POUR UN BALAI D'ESSUIE-GLACE ET BALAI D'ESSUIE-GLACE COMPRENANT UN TEL RACCORD D'EXTRÉMITÉ

(43) Date of publication of application: 20.06.2018
(73) Proprietor: Valeo Autosystemy SP. Z.O.O., 32-050 Skawina (PL)
(72) Inventor: Rogala, Andrzej, 30-867 Kraków (PL); Topolski, Daniel, 27-200 Starachowice (PL)
(74) Representative: Valeo Systèmes d'Essuyage

(56) References cited:
- EP-A1- 1 698 533
- DE-A1-102010 042 095
- DE-A1-102013 221 793
- US-A1- 2015 151 716

## Description

### FIELD OF THE INVENTION

Present invention, in general, relates to an end fitting for use in a wiper blade, especially to a wiper blade of a vehicle. Present invention also relates to a wiper blade comprising such the end fitting.

### BACKGROUND OF THE INVENTION

In modern vehicles wiper blades of a specific type are commonly used. Said wiper blade are so called "flat blades". A conventional flat wiper blade comprises a longitudinal wiping lip for removing, by wiping, water, snow, etc., off a window of the vehicle. The flat (wiper) blade also comprises one or two stiffening strips, mounted in a longitudinal groove on one or both sides of the wiping lip, respectively. The stiffening strip(s) is(are) made of a resilient material, especially of stainless steel, and provides flexibility to the wiper blade and assures proper contact with a surface of a windshield of the vehicle. The integrity of the wiper blade is maintained by two end fitting mounted on both sides of the wiper blade, fastening together the wiping lip and the stiffening strip(s). To further improve the integrity of the wiper blade, it usually comprises additional clips positioned on the blade between two end fittings. Said clips, also called retainers, engage the wiping lip with the stiffening strip(s). The wiper blade also comprises a connector and a slider for mounting the wiper blade to the blade arm and to transfer the motion from a wiper motor to the wiper blade to wipe the windshield of the vehicle.

The drawback of the conventional wiper blade lies in that the end fittings project longitudinally beyond the wiping lip. In consequence the total length of the wiper blade is longer than the effective length of the wiping lip. The effective length of the blade is a width of a band on the windshield surface wiped by the wiper blade and is defined by the length of the wiping lip. Therefore, there is an area of the windshield surface within the range of the wiper blade which is not wiped during each run. This problem is especially significant for a vehicle wherein two wiper blades, longitudinally aligned to each other, are used for the same windshield. In such the case, unwiped area is formed in a specific position on the vehicle's windshield, especially at the bottom of the vehicle's windshield between the wiper blades.

There were many attempts, in the field of wiper blades, made to overcome the above mentioned drawback of the conventional wiper blades.

One such the attempt is disclosed in the German patent application No. DE 102008010564 A1. Said application discloses a wiper element for a vehicle. The wiper element has a wiper section and a fastening section for coupling the wiper to a wiper arm. The wiper section has a length in the longitudinal direction that is greater than a length of the fastening section in the longitudinal direction. The differentiation in lengths of the particular sections is realized by cutting out of some parts of the fastening section at the end of the wiper element. The cut out is intended for accommodation of the end fitting in such manner that the front face of the end fitting of a wiper blade is aligned with the front face of the wiping section of the wiper element. An effective length of the wiper blade comprising such wiper element is the same as the total length of the blade.

Nonetheless, the wiper blade comprising the wiper element according to the German patent application No. DE 102008010564 A1 is encumbered with a significant drawback. Namely, because the end fitting of the wiper blade is shifted along the length of the wiper element and positioned in the cut out on the fastening section of the wiper element, the end of the wiping section just below the cut out in the securing section is not reliably secured by the end fitting. In consequence the end of the wiper element is free and tends to deform inappropriately during the wiping movement of the wiper blade, impairing thereby its efficiency. The end of the wiping element diverts in the direction opposite to the direction of the movement of the wiper blade, causing surface of the windshield, just below the wiper blade end, to be improperly wiped. Additionally, the deformation of the end of the wiper element, during the wiping movement, may generate scrapping sound, which may make an user of a vehicle think whether the wiper blade is actually functional or not. In some cases strange noise generated by the loose end of the wiper element may even irritate the user of the vehicle. Loose end of the wiper blade, undergoing deformation during the wiping movement of the wiper blade, also causes faster wearing of the wiper blade, especially the wiper element, shortening the working life of the wiper blade. DE-A-102010042095 shows the preamble of claim 1.

Therefore, there is still need for improvements of wiper blades, especially the wiper blades for vehicles.

### SUMMARY OF THE INVENTION

The invention is defined in claim 1. The first aspect of the present invention provides an end fitting for a wiper blade, the wiper blade comprising: a wiping lip comprising a longitudinal end and at least one longitudinal grove, at least one stiffening strip at least partially arranged in the groove of the wiping lip, wherein the end is configured for mounting on an longitudinal end of the wiper blade, the end fitting comprising: a hollow body comprising a longitudinal cavity configured to receive said wiping lip and said at least one stiffening strip, the cavity comprising retaining means located at the longitudinal end of said cavity for retaining the longitudinal end of the wining lip.

The end fitting according to the present invention allows to provide solid and reliable engagement for the wiping lip, especially for its longitudinal end, and at least one stiffening rib for assembling the wiper blade. The end fitting according to the present invention allows to form a wiper blade, wherein the effective length of said wiper blade is generally equal to the length of the wiping lip. This advantage is especially significant for the vehicles wherein two or more longitudinally aligned wiper blades are used because it allows to arrange said wiper blades next each other without undesired gaps between them, thereby minimizing unwiped area on the vehicle's windshield left by the wiper blades. The end fitting according to the present invention allows to provide the wiper blade with minimized undesired deformation of the longitudinal end of the wiping lip, thereby improving the efficiency of the wiper blade. By minimizing undesirable deformation of the longitudinal end of the wiping lip, as provided by the end fitting according to the present invention, the sound made by working wiper blade is also minimized.

In a preferred embodiment of the end fitting, the retaining means comprises at least one protrusion extending into the cavity for engaging with the groove at the longitudinal end of the wiping lip. The end fitting comprising at least one protrusion allows to further improve solidity and reliability of the engagement with the longitudinal end of the wiping lip.

In another preferred embodiment of the end fitting, the retaining means comprises a slant extending substantially obliquely from the cavity to the front edge of the fitting, the slant being substantially lateral to the main axis of said cavity, for abutting on the corresponding chamfer at the longitudinal end of the wiping lip. The end fitting comprising the slant allows to provide longitudinal reliability of the engagement of the end fitting with the wiping lip.

In yet another preferred embodiment of the end fitting, the retaining means comprises an end pad, the end pad being perpendicular to the main axis of the cavity, for abutting on the front surface of the longitudinal end of the wiping lip. The end fitting comprising the end pad allows to provide longitudinal reliability of the engagement of the end fitting with the wiping lip.

In further preferred embodiment of the end fitting, the retaining means comprises further at least one protrusion extending into the cavity and being in a vicinity of the corresponding slant or end pad respectively, for engaging with the groove at the longitudinal end of the wiping lip. Besides of longitudinal reliability of the engagement of the end fitting with the wiping lip, as provided by the slant or end pad, the end fitting comprising at least one protrusion allows to improve further solidity and reliability of the engagement with the longitudinal end of the wiping lip.

In yet further preferred embodiment of the end fitting, said at least one protrusion comprises at least one blocking element extending into the cavity for locking the wiping lip at its longitudinal end. The end fitting comprising at least one blocking element allows to improve yet further solidity and reliability of the engagement with the longitudinal end of the wiping lip. Moreover said end fitting comprising at least one said blocking element allows to further improve longitudinal reliability of the engagement of the end fitting with the wiping lip.

Further aspect of the present invention provides a wiper blade comprising: a wiping lip comprising a longitudinal end and at least one longitudinal groove, at least one stiffening strip at least partially arranged in the groove of the wiping lip, at least one end fitting mounted on a longitudinal end of the wiper blade, the end fitting comprising: a hollow body comprising a longitudinal cavity configured to receive said wiping lip and said at least one stiffening strip, the cavity comprising retaining means at the longitudinal end of said cavity for retaining the longitudinal end of the wiping lip.

The wiper blade according to the present invention comprises solid and reliable engagement of the wiping lip and said at least one stiffening strip. The wiper blade according to the present invention has the effective length equal to the total length of the wiping lip. Use of two or more longitudinally aligned wiper blades according to the present invention allows to arrange them next to each other without undesired gaps between them. In consequence an unwiped area on a vehicle's windshield left by the wiper blades is minimized. The longitudinal end of the wiping lip is securely mounted in the wiper blade assembly. Therefore, the longitudinal end of the wiping lip follows the deformation, as desired for the whole wiping lip, to efficiently wipe the windshield. Undesired deformation of the longitudinal end of the wiping lip is minimized, thus improving the efficiency of the wiper blade. By minimizing undesirable deformation of the longitudinal end of the wiping lip the sound made by working wiper blade is also minimized.

In the preferred embodiment of the wiper blade, the retaining means of the end fitting comprises at least one protrusion extending into the cavity engaging with the groove at the longitudinal end of the wiping lip. In such the wiper blade, the longitudinal end of the wiping lip, especially its longitudinal end, is more securely mounted in the end fitting, providing the wiper blade having yet improved solidity and reliability.

In another preferred embodiment of the wiper blade, the longitudinal end of the wiping lip comprises a chamfer, and the retaining means of the end fitting comprises a slant extending substantially obliquely from the cavity to the front edge, the slant being substantially lateral to the main axis of said cavity, abutting on said chamfer of the wiping lip. The wiper blade comprising the chamfer on the longitudinal end of the wiping lip and the slant on the end fitting has improved its longitudinal reliability.

In yet another preferred embodiment of the wiper blade, the wiping lip comprises a front surface on its longitudinal end, and the retaining means of the end fitting comprises an end pad, the end pad being perpendicular to the main axis of the cavity, abutting on said front surface of the wiping lip. The wiper blade comprising the end fitting with the end pad abutted on the front surface of the wiping lip, has improved its longitudinal reliability.

In further preferred embodiment of the wiper blade, the retaining means of the end fitting comprises further at least one protrusion extending into the cavity and being in a vicinity of the corresponding slant or end pad respectively, engaging with the groove at the longitudinal end of the wiping lip. Besides of longitudinal reliability of the wiper blade with the wiping lip, as provided by the slant or end pad of the end fitting, said wiper blade comprising the end fitting with at least one protrusion has further improved solidity and reliability of the end fitting with the longitudinal end of the wiping lip in the wiper blade assembly.

In yet further preferred embodiment of the wiper blade, said at least one protrusion of the end fitting comprises further at least one blocking element extending into the cavity and locking the wiping lip at its longitudinal end. The wiper blade comprising the end fitting with at least one blocking element has yet further improved solidity and reliability of said wiper blade. Moreover longitudinal reliability of the wiper blade is also further improved.

The end fitting and the wiper blade according to the present invention address the drawbacks of the technical solution in the field of the wiper blades from the state of the art, as specified above.

### BRIEF DESCRIPTION OF THE DRAWINGS

Further characteristics and advantages of the invention will become more apparent from the following detailed description of preferred, but not exclusive, embodiments of the invention, illustrated by way of non-limiting example in the accompanying drawings, wherein:
Fig. 1 is a perspective view of the end fitting according to the invention in one embodiment thereof,
Fig. 2 is a perspective view of side cross-section of the end fitting in the Fig. 1, taken along line A-A,
Fig. 3 is a perspective back view of the end fitting in the Fig. 1,
Fig. 4 is a perspective view of one end of the wiper blade according to one embodiment thereof,
Fig. 5 is a side view of the cross-section of the wiper blade in the Fig. 4,
Fig. 6 is a perspective view of the preferred embodiment of the end fitting in the Fig. 1
Fig. 7 is a perspective view of side cross-section of the end fitting in the Fig. 6, taken along line B-B,
Fig. 8 is a perspective view of the end fitting of the according to the invention in further preferred embodiment thereof,
Fig. 9 is a perspective view of a side cross-section of the end fitting in the Fig. 8, taken along line C-C,
Fig. 10 is a perspective back view of the end fitting in the Fig. 8,
Fig. 11 is a perspective view of one end of the wiper blade according to further embodiment thereof,
Fig. 12 is a side view of the cross-section of the wiper blade in the Fig. 11,
Fig. 13 is a perspective view of a side cross-section of the preferred embodiment of the end fitting in the Fig. 8,
Fig. 14 is a perspective back view of the end fitting in the Fig. 13,
Fig. 15 is a side view of the cross-section of the wiper blade according to further preferred embodiment thereof,
Fig. 16 is a perspective view of the end fitting according to an unclaimed embodiment,
Fig. 17 is a perspective side cross-section of the end fitting in the Fig. 16, taken along line D-D
Fig. 18 is a perspective back view of the end fitting in the Fig. 16,
Fig. 19 is a perspective view of one end of the wiper blade according to an unclaimed embodiment,
Fig. 20 is a side view of the cross-section of the wiper blade in the Fig. 19,
Fig. 21 is a perspective view of a side cross-section of the preferred embodiment of the end fitting in the Fig. 17,
Fig. 22 is a perspective back view of the end fitting in the Fig. 21,
Fig. 23 is a side view of the cross-section of the wiper blade according to yet another preferred embodiment thereof.

### DETAILED DESCRIPTION OF THE PREFERRED EMBODIMENTS

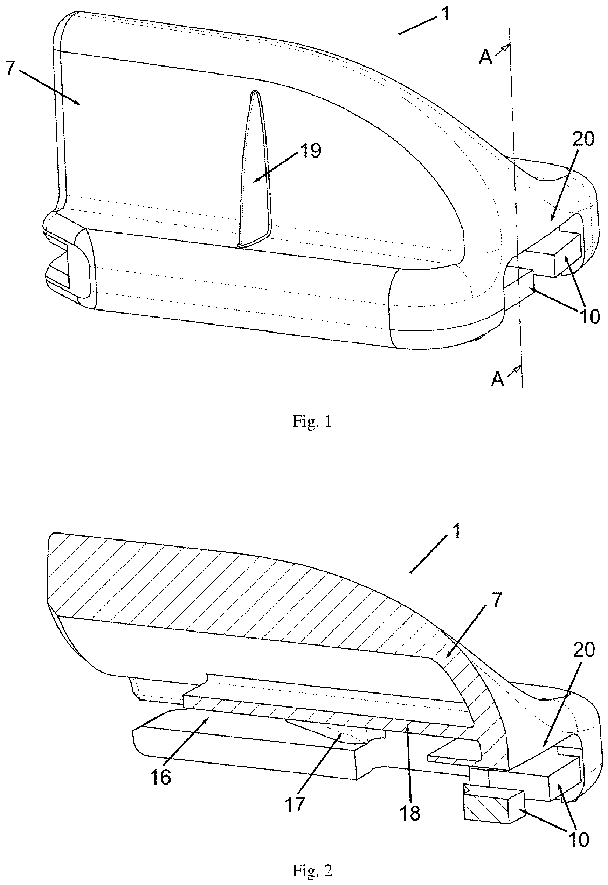

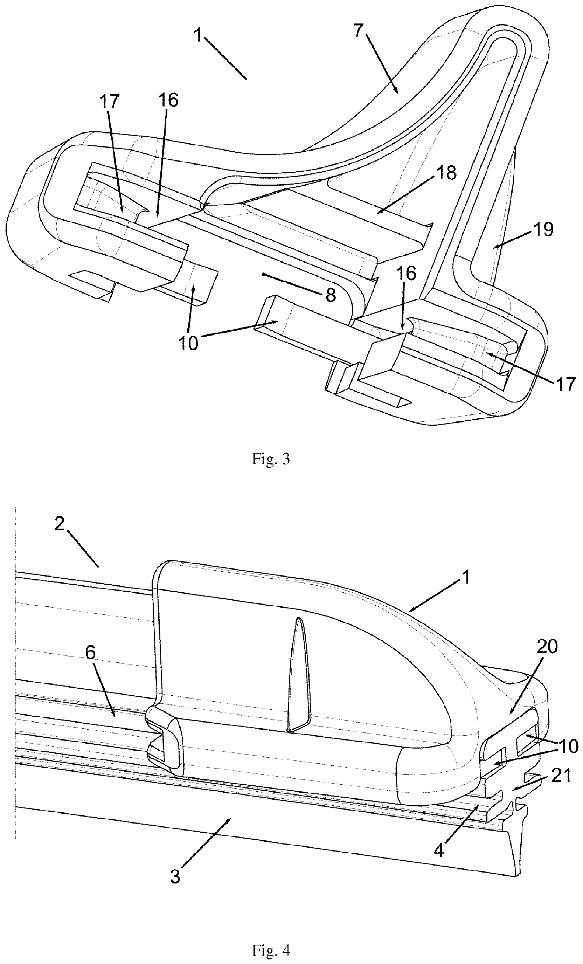

Referring now to the drawings, and initially to the Figs. 1 to 3, the end fitting 1 according to one embodiment of the present invention is shown. The end fitting 1 comprises a hollow body 7 for mounting in a wiper blade 2. The body 7 comprises a cavity 8 extending longitudinally along the length of the body 7 for receiving a wiping lip 3 and, at least, one stiffening strip 6. The cavity 8 is in a form of a slit open at the bottom side of the body 7 of the end fitting 1 and is open at its both longitudinal ends. The cavity 8 comprises at least one slot 16 located on one of its sides for receiving the stiffening strip 6. The slot 16 extends longitudinally along the length of the body 7 of the end fitting 1, as shown in Figs 2 and 3. The slot 16 comprises further engaging means 17 for engaging the stiffening strip 6. The engaging means 17 is, usually, a latch snapping with a corresponding recession in the stiffening strip 6, as shown in the Figs. 2 and 3. Depending on the type of the flat wiper blade 2, the cavity 8 of the body 7 comprises one slot 16 on one of sides of the cavity (not shown in Figs.) for receiving only one stiffening strip 6. In another preferred embodiment of the end fitting, the cavity 8 comprises two opposite slots 16 located on both, opposite sides of the cavity 8, as shown in the Fig. 3, each comprising the engaging means 17, for receiving and engaging two stiffening strips 6 mounted on both sides of the wiping lip 3.

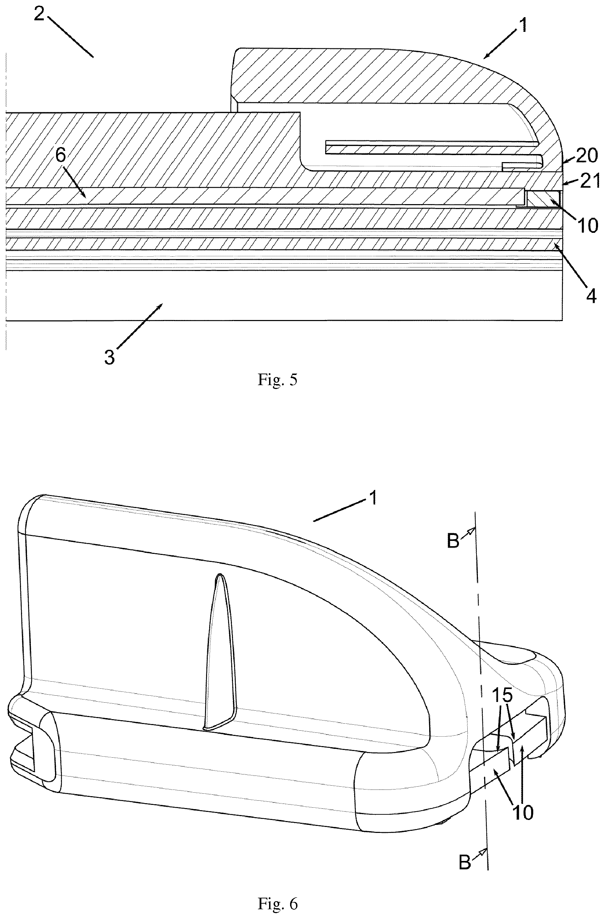

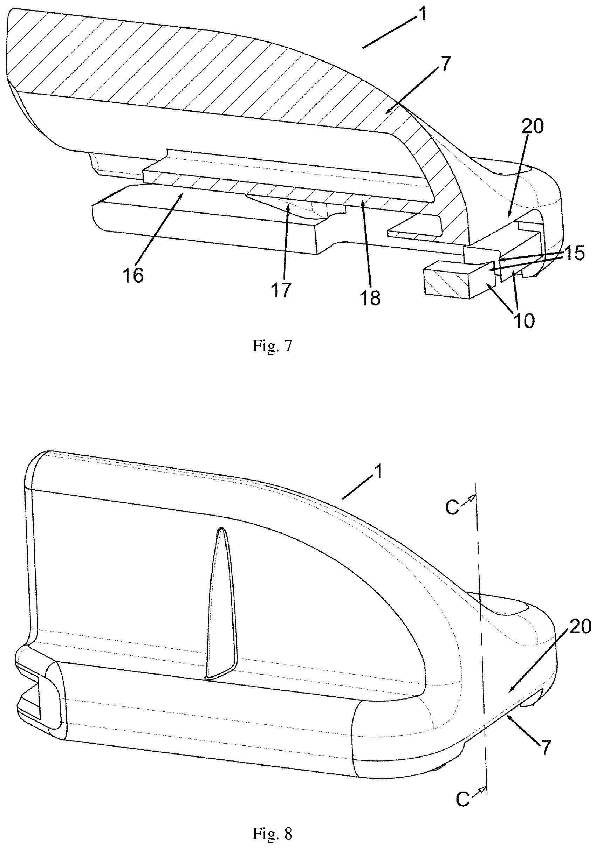

At one of the ends of the cavity 8 of the end fitting 1, according to the present invention, the end receiving a longitudinal end 4 of the wiping lip 3, an engaging means for engaging the wiping lip 3 at its longitudinal end 4 are located inside the cavity 8. The wiping lip engaging means is for fastening reliably the longitudinal end 4 of the wiping lip 3 in the wiper blade 2. In one embodiment of the end fitting the wiping lip engaging means comprises a protrusion 10 extending from the slot 16 into the interior of the cavity 8. In a preferred embodiment, shown in the Figs. 2 and 3, the engaging means comprises two protrusions 10 extending from two opposite slots 16 into the interior of the cavity 8, the protrusions 10 facing each other. The protrusions 10 are aligned with the face 20 of the body 7 of the end fitting 1, so that said protrusions 10 do not extend beyond said face 20 of the body 7 of the end fitting 1, as shown in the Figs. 1 and 2. When used in the wipe blade, the protrusions 10 of the end fitting 1 provides tight securing for the longitudinal end 4 of the wiping lip 3, assuring reliable engagement of the wiping lip 3 with one or two stiffening strip 6, thus minimizing undesirable deformation of the longitudinal end 4 of the wiping lip 3. In a preferred embodiment of the end fitting 1 the protrusion(s) 10 comprises(comprise) a blocking element 15 located on a face of the protrusion (s) 10, directed into the cavity. As shown in the Figs. 6 and 7, the blocking element 15 is a sharp edge extending into the cavity 8 of the body 7 of the end fitting 1. The blocking element 15 provides squeezing an area of the longitudinal end 4 of the wiping lip 3. When the end fitting is mounted in the wiper blade 2, the squeezed area being located on side in a direct vicinity of the longitudinal face of the longitudinal end 4 of the wiping lip 3. Combination of the protrusions 10 and a blocking elements 15 in the fitting end 1 allows to prevent the wiping lip 3 from displacement along the length of the wiper blade 2, providing longitudinal reliability of said wiper blade 2.

In a preferred embodiment of the end fitting a bottom of the cavity 8, especially at its end comprising the wiping lip engaging means, corresponds to the shape of the longitudinal end 4 of the wiping lip 3, as shown in the Figs. 4, 5, 11, 12, 15, 19, 20 and 23.

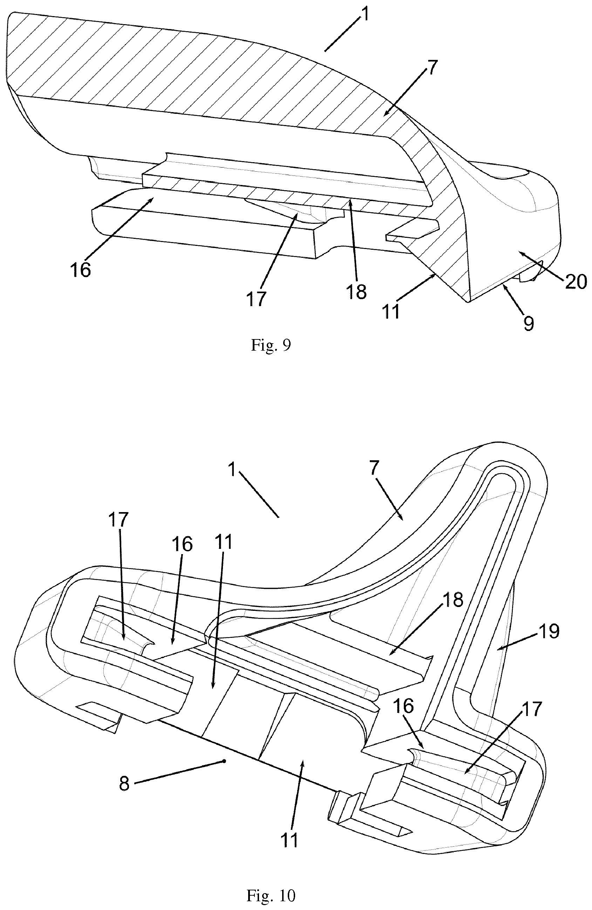

In other embodiment of the end fitting 1, shown in the Figs. 8 to 10, the end fitting 1 follows the structure of the end fitting 1, as described above for one embodiment thereof, except for the wiping lip engaging means. In this embodiment the wiping lip engaging means comprises a lateral slant 11. The slant 11 is located in the cavity 8 of the body 7 and extends obliquely from the bottom of the cavity 8 to the face 20 of the body 7. An edge 9 is formed on a crossing of the slant 11 and the face 20 of the body 7. The edge 9 is preferably positioned in such the way that the slant 11 closes the slot 16, as shown in the Figs. 8 to 10. In consequence the cavity 8 is closed at its end, which receives the longitudinal end 4 of the wiping lip 3. The slant 11 forms a surface intended for abutting with a corresponding inclined chamfer 12, as provided on the face 21 of the longitudinal end 4 of the wiping lip 3. Each slot 16 for engaging the stiffening strip 6 inside the cavity 8 extends till the slant 11. As mentioned above, depending on the type of the wiper blade 2, the cavity 8 of the body 7 of the end fitting 1 comprises one or two opposite slots 16. Due to the fact that the stiffening strip(s) 6 reaches(reach) the slant 11, the strip(s) is(are) longer than the one(s) in the conventional end fitting, the end fitting 1 according to this embodiment provides solid and reliable engagement for the longitudinal end 4 of the wiping lip 3. Moreover, because the slant 11 is intended for abutting the corresponding chamfer 12 at the longitudinal end 4 of the wiping lip 3, the longitudinal movement of the wiping lip 3 is prevented, thus providing longitudinal reliability of the wiper blade 2.

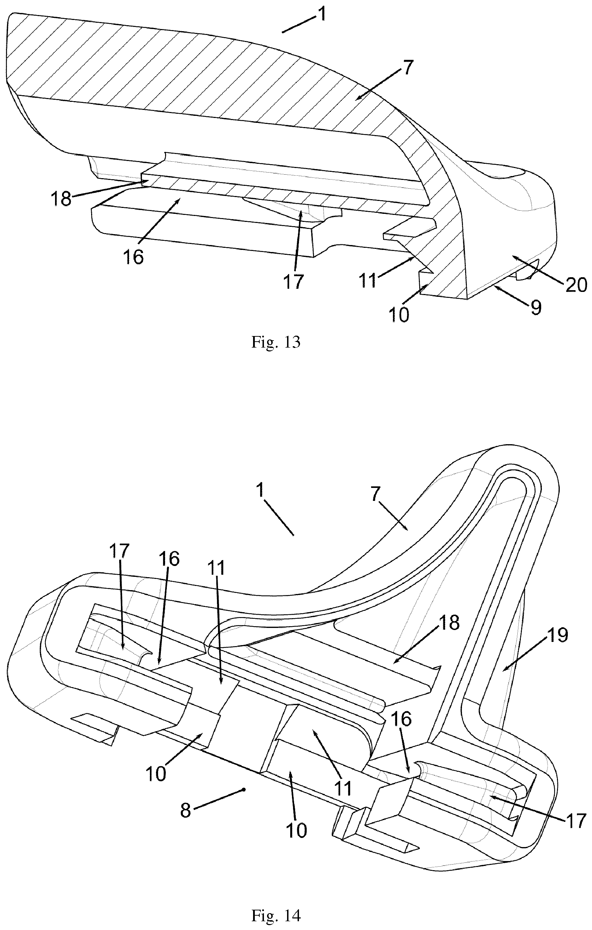

In a preferred embodiment of the end fitting 1 according to the present invention, the wiping lip engaging means further comprises a protrusion 10 extending from the slot 16 into the cavity 8. The protrusion 10 is located next to the slant 11 and is integrated with said slant 11. The second opposite slot 16, if present, comprises another protrusion 10 extending from the slot 16 into the cavity 8, the protrusion 10 being integrated with the slant 11, as shown in the Figs. 13 and 14. The end fitting 1, according to the present invention, including the engaging means comprising the slant 11 and the protrusion(s) 10 allows to provide the ability for further improvement of reliability and effectiveness of engagement of the longitudinal end 4 of the wiping lip 3.

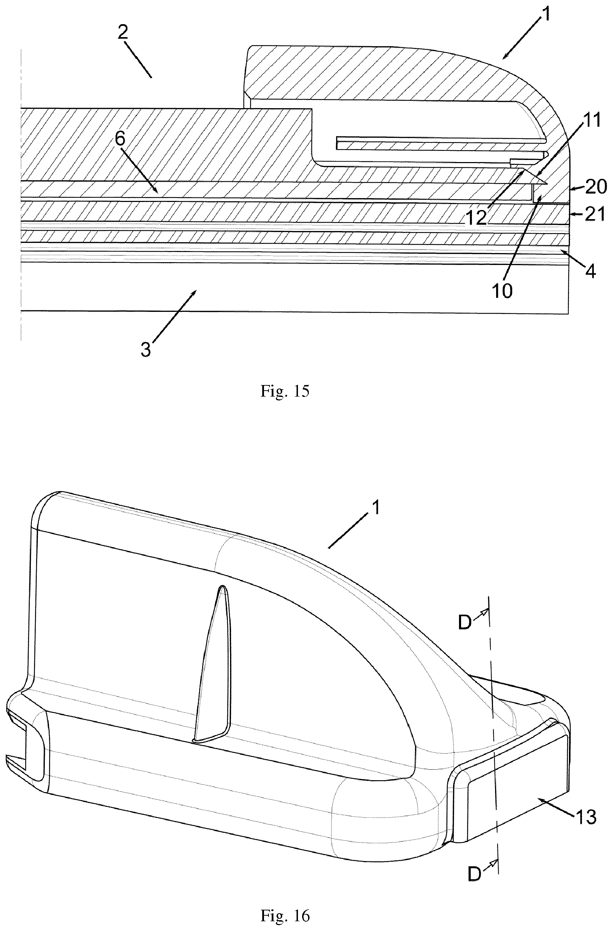

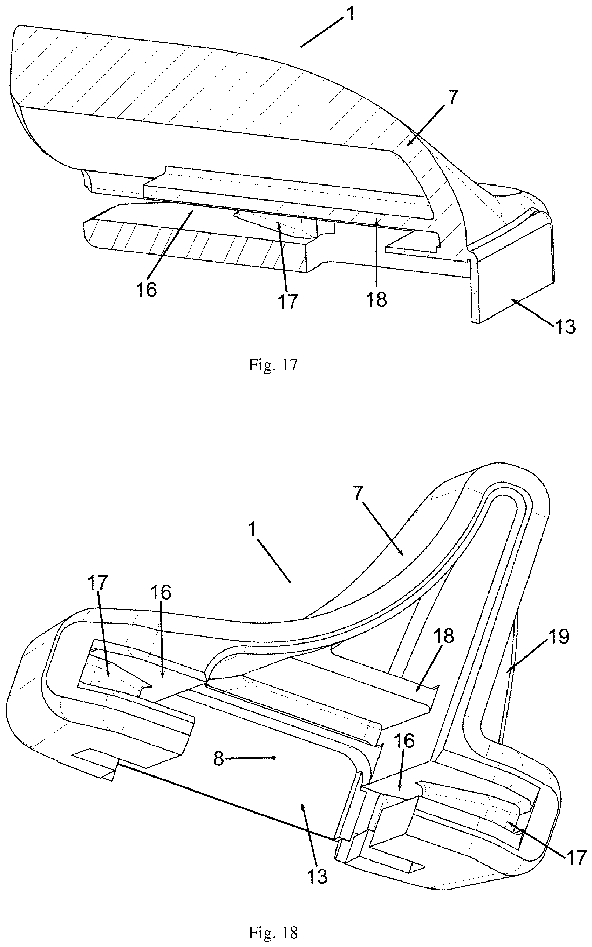

In yet other embodiment, shown in the Figs. 16 to 18, the end fitting 1 according to the present invention, follows the structure of the end fitting 1, as described above for one embodiment thereof, except for the wiping lip engaging means. In this embodiment the wiping lip engaging means comprises an end pad 13, the end pad 13 being perpendicular to the main axis of the cavity 8 of the body 7 of the end fitting 1. Main axis is the axis parallel to the length of the end fitting 1, as shown in the Figs. 16 to 18. The end pad 13 closes the cavity 8 of the body 7 at its end, the end receiving the longitudinal end 4 of the wiping lip 3. The end pad 13 is intended for abutting the front surface 14 of the longitudinal end 4 of the wiping lip 3. The end fitting 1 according to this embodiment provides solid and reliable engagement of the longitudinal end 4 of the wiping lip 3. Moreover, because the end pad 13 provides the ability for abutting the corresponding front surface 14 of the longitudinal end 4 of the wiping lip 3, as described above, the longitudinal movement of the wiping lip 3 may be prevented, thus providing longitudinal reliability of the wiper blade 2.

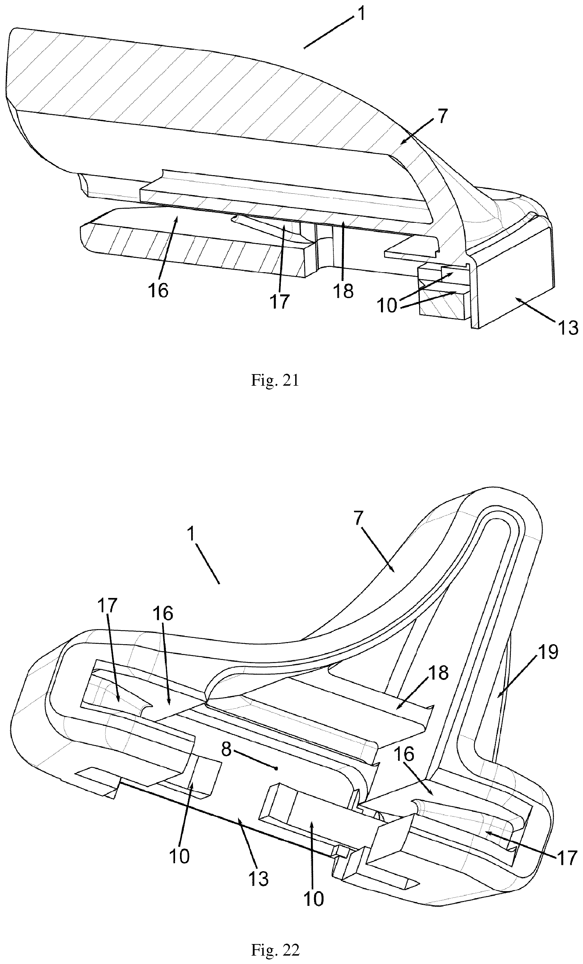

In a preferred embodiment of the end fitting 1 according to the present invention, the wiping lip engaging means further comprises a protrusion 10 extending from the slot 16 into the cavity 8. The protrusion 10 is located next to the end pad 13. In yet preferred embodiment the end fitting said protrusion 10 is integrated with said end pad 13 (not shown in the Figs.). The second, opposite slot 16, if present, comprises another protrusion 10 extending from the slot 16 into the cavity 8, as shown in the Figs. 21 and 22. In further preferred embodiment of the end fitting 1 both protrusions 10 are integrated with the end pad 13 (not shown in the Figs.). The end fitting 1 according to the present invention includes the engaging means comprising the end pad 13 and the protrusion(s) 10 allows to provide improved, reliable and effective engagement of the longitudinal end 4 of the wiping lip 3.

The body 7 of the end fitting 1, as described above, also comprises other components, for example but without limitation, an inner wall 18 located inside the cavity 8 for strengthening the body 7 of the end fitting 1, as shown in the Figs. 2 and 3. The body 7 of the end fitting 1 comprises ribs 19 located on its external surface. These skilled in the art are aware of what kind of further components of the end fitting may or shall be used with the present invention depending of the conditions of the intended use and, therefore, the said further components will not be discussed here in more details.

The end fitting 1, as described above, is used for assembling a flat wiper blade, also called a flat blade or just shortly a wiper blade. The wiper blade 2 according to the present invention comprises a wiping lip 3 configured for wiping a windshield, especially the windshield of a vehicle, at least one stiffening strip 6, and at least one end fitting 1 according to the present invention as described above, mounted at the end of the wiper blade 2. The wiping lip 3 is a conventional wiping lip, widely used in the field of wiper blades. These skilled in the art are aware of what kind of a wiping lip shall be used with the present invention depending of the conditions of the intended use and, therefore, the wiping lips will not be discussed here in more details. The wiping lip 3 comprises at least one groove 5 located on one of its sides and extending along its length. The groove 5 is configured for receiving, at least partially, the stiffening strip 6. In one preferred embodiment, for some types of the flat wiper blades, the wiping lip 3 comprises only one longitudinal groove 5 on one of side of the wiping lip 3 (not shown in the Figs.). In other preferred embodiment, the wiping lip comprises two longitudinal grooves 5, on the opposite sides of the wiping lip 3, both for receiving two stiffening strips 6. The stiffening strip 6 is a conventional stiffening strip widely used in the field of flat wiper blades. These skilled in the art are aware of what kind of a stiffening strip(s) shall be used with the present invention depending of the conditions of the intended use and, therefore, the stiffening strips will not be discussed here in more details.

The wiper blade according to the invention comprises the end fitting 1, as described above, the end fitting 1 being mounted at the end of the wiper blade 2. The stiffening strip 6 is located in a longitudinal groove 5 of the wiping lip 3. The second stiffening strip 6, if present, is located in the second groove 5 in the wiping lip 3 on opposite side to the first stiffening strip 6, as shown in the Figs. 4 and 5. The assembly comprising the wiping lip 3 and the stiffening strip(s) 6 is(are) mounted in the cavity 8 of the body 7 of the end fitting 1, wherein the stiffening strip(s) 6 is(are) engaged in the corresponding slot(s) 16 by the stiffening strip engaging means, *e.g*., by latch(es) of the slot(s) 16 coupled with the corresponding recession(s) in the stiffening strip(s) 6. Therefore, the end fitting 1 in the wiper blade 2 according to the invention encompass the stiffening strip(s) 6 and a part of the wiping lip 3, especially the longitudinal end 4 of said wiping lip 3.

In the wiper blade 2 according to the invention, the end fitting 1 comprising the wiping lip engaging means with the protrusion(s) 10 only, as described above and shown in the Figs. 1 to 3, is(are) mounted on the wiper blade 2, as described above, wherein the face 20 of the body 7 of the end fitting 1 is aligned with the face 21 of the wiping lip 3, as shown in the Figs. 4 and 5. The protrusion(s) 10 fastens(fasten) the longitudinal end 4 of the wiping lip 3 by squeezing material of the wiping lip 3 in the groove 5, thus providing secure and reliable engagement for the longitudinal end 4 of the wiping lip 3 in the wiper blade according to the invention, minimizing thus undesirable deformation of the longitudinal of the longitudinal end 4 of the wiping lip 3 in said wiper blade 2.

In a preferred embodiment of the wiper blade 2 according to the invention, protrusion(s) 10 of the end fitting comprises(comprise) the blocking element 15, as described above and shown in the Figs 6 and 7. The blocking element(s) 15 of the end fitting 1 in the wiper blade 2 of this preferred embodiment engages(engage) with the very end of the longitudinal end 4 of the wiping lip 3, further improving thus efficiency of the engaging of the wiping lip engaging means, protrusion(s) 10 in the wiper blade 2, especially precluding from displacement of the wiping lip 3 along the length of said wiper blade 2, providing thereby its longitudinal reliability.

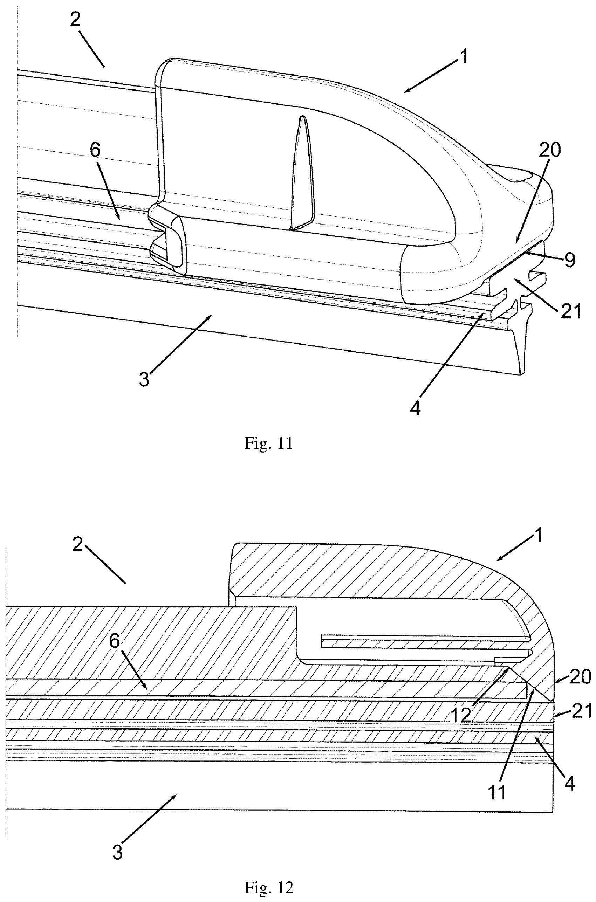

The wiper blade 2 according to further preferable embodiment comprises the end fitting 1, the end fitting 2 comprising the wiping lip engaging means with the slant 11, as described above and shown in the Figs. 8 to 10. Said end fitting 1 is also mounted on the wiper blade 2, wherein the wiping lip 3 comprises the inclined chamfer 12, provided on the face 21 of the longitudinal end 4 of the wiping lip 3 and corresponding to the slant 11 of the end fitting 1. The end fitting 1 is mounted on the wiper blade 2 so that the face 20 of the body 7 of the end fitting 1 is aligned with the face 21 of the wiping lip 3, as shown in the Fig. 11 and 12. As shown in the Fig. 12, the longitudinal end of the stiffening strip(s) 6 is in direct vicinity of the slant 11, providing thereby in the wiper blade 2 secure and reliable engagement of the wiping lip 3, including its longitudinal end 4. The slant 11 in the cavity 8 of the body 7 abuts the chamfer 12 provided on the longitudinal end 4 of the wiping lip 3, thereby precluding from displacement of the wiping lip 3 in the wiper blade 2 along its length.

The wiper blade 2 according to yet further preferred embodiment of the present invention comprises the end fitting 1, wherein the wiping lip engaging means of the end fitting 1 comprises the slant 11 and protrusion(s) 10 integrated with said slant 11, as described above and shown in the Figs. 13 and 14. In the wiper blade 2 according to this embodiment, the protrusion(s) 10 of the end fitting 1 engages with the longitudinal end 4 of the wiper blade 2, as shown in the Fig 15. The wiper blade 2 comprises more secure and reliable engagement of the longitudinal end 4 of said wiping lip 3. Moreover the slant 11 of the end fitting 1 abuts the corresponding chamfer 12 the longitudinal end 4 of the wiping lip 3, preventing movement of the wiping lip 3 along the length of the wiper blade 2, ensuring thereby the longitudinal reliability of said wiper blade 2.

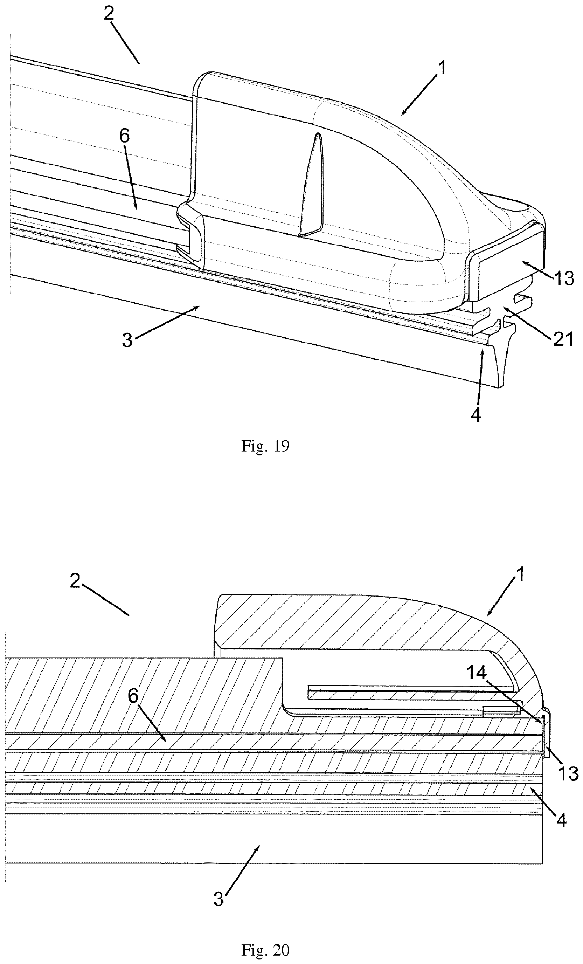

In another preferred embodiment of the wiper blade 2 according to the invention, the end fitting 1 comprising the wiping lip engaging means with of the end pad 13 only, as described above and shown in the Figs. 16 to 18, is mounted on said wiper blade 2. The inner surface of the end pad 13 of the end fitting 1, *i.e.,* the surface of the end pad 13 directed into the cavity 8 of the body 7, is faced to the front surface 14 of the wiping lip 3, as shown in the Fig. 20. As also shown in the Fig. 20, each slot 16 for stiffening strip 6 inside the cavity 8 extends till the lateral end pad 13. As mentioned above, depending on the type of the wiper blade 2, the cavity 8 of the body 7 comprises one or two opposite slots 16. Because the stiffening strip(s) 6 reaches(reach) the end pad 13, the stiffening strip(s) 16 is(are) longer than in the conventional end fitting. Therefore, the longitudinal end of the stiffening strip(s) 6 is(are) in direct vicinity of the end pad 13, thereby providing secure and reliable engagement of the wiping lip 3 in the wiper blade 2, including longitudinal end 4 of said wiping lip 3. The end pad 13 abuts the face 21 of the wiping lip 3, as shown in the Fig. 20, thereby precluding from displacement of the wiping lip 3 along the length of the wiper blade 2.

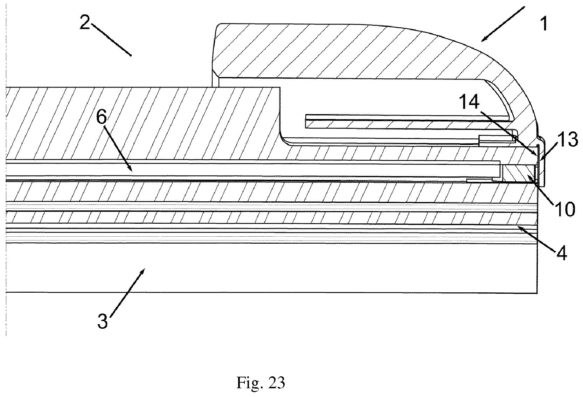

In yet further preferred embodiment of the wiper blade 2 according to the present invention, the wiper blade 2 comprises the wiping lip engaging means of the end fitting 1 comprising the end pad 13 and protrusion(s) 10, as described above and shown in the Figs. 21 to 22. The protrusion(s) 10 engages(engage) with the longitudinal end 4 of the wiper blade 2, as shown in the Fig. 23, thereby providing secure and reliable engagement of the longitudinal end 4 of the wiping lip 3 in the wiper blade 2. Moreover, as shown in the Fig. 23, the end pad 13 of the end fitting 1 abuts the front surface 14 of the wiping lip 3, preventing movement of the wiping lip 3 along the length of the wiper blade 2, ensuring thus longitudinal reliability of said wiper blade 2.

The wiper blade 2 according to the present intention also comprises further components. For example but without limitation, the wiper blade 2 according to the invention comprises a connector mounted on the wiper blade 2, usually placed in the middle of its length, for coupling the wiper blade 2 with an wiper arm to transfer the movement from a wiper motor to the wiping movement of the wiper blade 2. When necessary, the wiper blade 2 comprises at least one retainer clip to assure the integrity of the wiper blade 2 along its length. Necessary, or auxiliary, components for the wiper blades are known to these skilled in the art and will not be discussed here in more details.

As described hereinabove, the present invention solves many problems associated with end fittings and wiper blades known from the state of the art. The invention was described in a context of the widescreen (a front window) of a vehicle. Nonetheless, it will be apparent for those skilled in the art that the invention may be used on other windows of a vehicle, especially on the rear window (a back window) of a vehicle. Further, it should be appreciated that various changes in the details and arrangements, which have been described and illustrated herein in order to explain the nature of the invention, may be made by these skilled in the art without departing from the principle and scope of the invention, as expressed in the appended claims.

### Definitions:

- 1: an end fitting
- 2: a wiper blade
- 3: a wiping lip
- 4: a longitudinal end of the wiping lip 3
- 5: a groove in the wiping lip 3
- 6: a stiffening strip
- 7: a body of the end fitting 1
- 8: a cavity in the body 7
- 9: a front edge of the body 7
- 10: a protrusion
- 11: a slant in the end fitting 1
- 12: a chamfer on the wiping lip 3
- 13: an end pad in the end fitting 1
- 14: a front surface of the wiping lip 3
- 15: a blocking element on the protrusion 10
- 16: a slot for receiving the stiffening strip 6
- 17: an engaging means for the stiffening strip 6
- 18: an inner wall inside the cavity 8 of the body 7
- 19: a rib
- 20: a face of the body 7
- 21: a face of the wiping lip 3

## Claims

1. End fitting (1) for a wiper blade (2), the wiper blade (2) comprising:
a wiping lip (3) comprising a longitudinal end (4) and at least one longitudinal groove (5), at least one stiffening strip (6) at least partially arranged in the groove (5) of the wiping lip (3),
wherein the end fitting (1) is configured for mounting on an longitudinal end of the wiper blade (2), the end fitting (1) comprising:
a hollow body (7) comprising a longitudinal cavity (8) configured to receive said wiping lip (3) and said at least one stiffening strip (6),
the cavity (8) comprising at least one slot (16) located on one of its sides for receiving said at least one stiffening strip (6), the at least one slot (16) extends longitudinally along the length of the hollow body (7) of the end fitting (1),
the cavity (8) comprising retaining means at the longitudinal end of said cavity (8) for retaining the longitudinal end (4) of the wiping lip (3), **characterized in that** the retaining means comprise at least one protrusion (10) extending into the cavity (8) for engaging with the groove (5) at the longitudinal end (4) of the wiping lip (3), the at least one protrusion extending from the at least one slot (16) into the interior of the cavity (8) and/or the retaining means comprise a slant (11) extending substantially obliquely from the cavity (8) to the front edge (9) of the fitting (1), the slant (11) being substantially lateral to the main axis of said cavity (8), for abutting on the corresponding chamfer (12) at the longitudinal end (4) of the wiping lip (3), the slant (11) closing the slot (16).

2. End fitting (1) according to the claim 1, wherein the retaining means further comprise an end pad (13), the end pad (13) being perpendicular to the main axis of the cavity (8), for abutting on the front surface (14) of the longitudinal end (4) of the wiping lip (3).

3. End fitting (1) according to any claim 1 or 2, wherein the retaining means comprise further at least one protrusion (10) extending into the cavity (8) and being in a vicinity of the corresponding slant (11) or end pad (13) respectively, for engaging with the groove (5) at the longitudinal end (4) of the wiping lip (3).

4. End fitting (1) according to any claim 1 or 3, wherein said at least one protrusion (10) comprises at least one blocking element (15) extending into the cavity (8) for locking the wiping lip (3) at its longitudinal end (4).

5. A wiper blade (2) comprising:
a wiping lip (3) comprising a longitudinal end (4) and at least one longitudinal groove (5),
at least one stiffening strip (6) at least partially arranged in the groove (5) of the wiping lip (3),
at least one end fitting (1) according to any claim 1 to 4 mounted on a longitudinal end of the wiper blade (2).

6. Wiper blade (2) according to the claim 5, wherein the wiping lip (3) comprises a front surface (14) on its longitudinal end (4), and the retaining means of the end fitting (1) further comprise an end pad (13), the end pad being perpendicular to the main axis of the cavity (8), abutting on said front surface (14) of the wiping lip (3).

7. Wiper blade (2) according to any claim 5 or 6, wherein the retaining means of the end fitting (1) comprise further at least one protrusion (10) extending into the cavity (8) and being in a vicinity of the corresponding slant (11) or end pad (12) respectively, engaging with the groove (5) at the longitudinal end (4) of the wiping lip (3).

8. Wiper blade (2) according to any claim 5 or 7, wherein said at least one protrusion (10) of the end fitting (1) comprises further at least one blocking element (15) extending into the cavity (7) and locking the wiping lip (3) at its longitudinal end (4).

## Patentansprüche

1. Endstück (1) für ein Wischerblatt (2), wobei das Wischerblatt (2) Folgendes umfasst:
eine Wischlippe (3), die ein längliches Ende (4) und mindestens eine Längsnut (5) umfasst,
mindestens einen Versteifungsstreifen (6), der zumindest teilweise in der Nut (5) der Wischlippe (3) angeordnet ist,
wobei das Endstück (1) zur Montage auf einem Längsende des Wischerblatts (2) ausgelegt ist, wobei das Endstück (1) Folgendes umfasst:
einen Hohlkörper (7), der einen länglichen Hohlraum (8) umfasst, der dazu ausgelegt ist, die Wischlippe (3) und den mindestens einen Versteifungsstreifen (6) aufzunehmen,
wobei der Hohlraum (8) mindestens einen Schlitz (16) umfasst, der sich auf einer seiner Seiten befindet, um den mindestens einen Versteifungsstreifen (6) aufzunehmen, wobei sich der mindestens eine Schlitz (16) in Längsrichtung entlang der Länge des Hohlkörpers (7) des Endstücks (1) erstreckt,
wobei der Hohlraum (8) eine Halteeinrichtung am Längsende des Hohlraums (8) umfasst, um das Längsende (4) der Wischlippe (3) zu halten, **dadurch gekennzeichnet, dass** die Halteeinrichtung mindestens einen Vorsprung (10) umfasst, der sich in den Hohlraum (8) erstreckt, um in die Nut (5) am Längsende (4) der Wischlippe (3) einzugreifen, wobei sich der mindestens eine Vorsprung von dem mindestens einen Schlitz (16) in das Innere des Hohlraums (8) erstreckt und/oder wobei die Halteeinrichtung eine Schräge (11) umfasst, die sich im Wesentlichen schräg vom Hohlraum (8) zur Vorderkante (9) des Endstücks (1) erstreckt, wobei die Schräge (11) im Wesentlichen lateral zur Hauptachse des Hohlraums (8) verläuft, um an der zugehörigen Fase (12) am Längsende (4) der Wischlippe (3) anzuschlagen, wobei die Schräge (11) den Schlitz (16) verschließt.

2. Endstück (1) nach Anspruch 1, wobei die Halteeinrichtung ferner ein Endpolster (13) umfasst, wobei das Endpolster (13) senkrecht zur Hauptachse des Hohlraums (8) verläuft, um an der Vorderfläche (14) des Längsendes (4) der Wischlippe (3) anzuschlagen.

3. Endstück (1) nach Anspruch 1 oder 2, wobei die Halteeinrichtung ferner mindestens einen Vorsprung (10) umfasst, der sich in den Hohlraum (8) erstreckt und sich in der Nähe der zugehörigen Schräge (11) bzw. des Endpolsters (13) befindet, um in die Nut (5) am Längsende (4) der Wischlippe (3) einzugreifen.

4. Endstück (1) nach Anspruch 1 oder 3, wobei der mindestens eine Vorsprung (10) mindestens ein Blockierelement (15) umfasst, das sich in den Hohlraum (8) erstreckt, um die Wischlippe (3) am Längsende (4) zu arretieren.

5. Wischerblatt (2), Folgendes umfassend:
eine Wischlippe (3), die ein Längsende (4) und mindestens eine Längsnut (5) umfasst,
mindestens einen Versteifungsstreifen (6), der zumindest teilweise in der Nut (5) der Wischlippe (3) angeordnet ist,
mindestens ein Endstück (1) nach einem der Ansprüche 1 bis 4, das auf einem Längsende des Wischerblatts (2) montiert ist.

6. Wischerblatt (2) nach Anspruch 5, wobei die Wischlippe (3) eine Vorderfläche (14) am Längsende (4) umfasst und die Halteeinrichtung des Endstücks (1) ferner ein Endpolster (13) umfasst, wobei das Endpolster senkrecht zur Hauptachse des Hohlraums (8) verläuft und an der Vorderfläche (14) der Wischlippe (3) anschlägt.

7. Wischerblatt (2) nach Anspruch 5 oder 6, wobei die Halteeinrichtung des Endstücks (1) ferner mindestens einen Vorsprung (10) umfasst, der sich in den Hohlraum (8) erstreckt und sich in der Nähe der zugehörigen Schräge (11) bzw. des Endpolsters (12) befindet und in die Nut (5) am Längsende (4) der Wischlippe (3) eingreift.

8. Wischerblatt (2) nach einem der Ansprüche 5 bis 7, wobei der mindestens eine Vorsprung (10) des Endstücks (1) ferner mindestens ein Blockierelement (15) umfasst, das sich in den Hohlraum (7) erstreckt und die Wischlippe (3) an ihrem Längsende (4) arretiert.

## Revendications

1. Raccord d'extrémité (1) pour un balai d'essuie-glace (2), comprenant :
un bec d'essuyage (3) comprenant une extrémité longitudinale (4) et au moins une rainure longitudinale (5), au moins une bande de renfort (6) étant au moins en partie disposée dans la rainure (5) du bec d'essuyage (3),
dans lequel le raccord d'extrémité (1) est conçu pour être monté sur une extrémité longitudinale du balai d'essuie-glace (2), le raccord d'extrémité (1) comprenant :
un corps creux (7) comprenant une cavité longitudinale (8) conçue pour recevoir ledit bec d'essuyage (3) et ladite au moins une bande de renfort (6),
la cavité (8) comprenant au moins une fente (16) située sur l'un de ses côtés pour recevoir ladite au moins une bande de renfort (6), l'au moins une fente (16) s'étendant longitudinalement sur la longueur du corps creux (7) du raccord d'extrémité (1),
la cavité (8) comprenant des moyens de retenue à l'extrémité longitudinale de ladite cavité (8) servant à retenir l'extrémité longitudinale (4) du bec d'essuyage (3), **caractérisé en ce que** les moyens de retenue comprennent au moins une protubérance (10) s'étendant dans la cavité (8) pour venir en prise avec la rainure (5) à l'extrémité longitudinale (4) du bec d'essuyage (3), l'au moins une protubérance s'étendant à partir de l'au moins une fente (16) dans l'intérieur de la cavité (8) et/ou les moyens de retenue comprennent une pente (11) s'étendant sensiblement à l'oblique à partir de la cavité (8) vers le bord avant (9) du raccord (1), la pente (11) étant sensiblement latérale à l'axe principal de ladite cavité (8), pour venir en butée sur le chanfrein correspondant (12) à l'extrémité longitudinale (4) du bec d'essuyage (3), la pente (11) fermant la fente (16).

2. Raccord d'extrémité (1) selon la revendication 1, dans lequel les moyens de retenue comprennent en outre un segment d'extrémité (13), le segment d'extrémité (13) étant perpendiculaire à l'axe principal de la cavité (8), destiné à venir en butée sur la surface avant (14) de l'extrémité longitudinale (4) du bec d'essuyage (3).

3. Raccord d'extrémité (1) selon l'une quelconque des revendications 1 et 2, dans lequel les moyens de retenue comprennent en outre au moins une protubérance (10) s'étendant dans la cavité (8) et se trouvant au voisinage de la pente correspondante (11) ou du segment d'extrémité (13), respectivement, pour venir en prise avec la rainure (5) à l'extrémité longitudinale (4) du bec d'essuyage (3).

4. Raccord d'extrémité (1) selon l'une quelconque des revendications 1 et 3, dans lequel ladite au moins une protubérance (10) comprend au moins un organe de blocage (15) s'étendant dans la cavité (8) pour verrouiller le bec d'essuyage (3) à son extrémité longitudinale (4).

5. Balai d'essuie-glace (2) comprenant :
un bec d'essuyage (3) comprenant une extrémité longitudinale (4) et au moins une rainure longitudinale (5), au moins une bande de renfort (6) étant au moins en partie disposée dans la rainure (5) du bec d'essuyage (3),
au moins un raccord d'extrémité (1) selon l'une quelconque des revendications 1 à 4, monté sur une extrémité longitudinale du balai d'essuie-glace (2).

6. Balai d'essuie-glace (2) selon la revendication 5, dans lequel le bec d'essuyage (3) comprend une surface avant (14) sur son extrémité longitudinale (4), et les moyens de retenue du raccord d'extrémité (1) comprennent en outre un segment d'extrémité (13), le segment d'extrémité étant perpendiculaire à l'axe principal de la cavité (8), venant en butée sur ladite surface avant (14) du bec d'essuyage (3).

7. Balai d'essuie-glace (2) selon l'une quelconque des revendications 5 et 6, dans lequel les moyens de retenue du raccord d'extrémité (1) comprennent en outre au moins une protubérance (10) s'étendant dans la cavité (8) et se trouvant au voisinage de la pente correspondante (11) ou du segment d'extrémité (12), respectivement, venant en prise avec la rainure (5) à l'extrémité longitudinale (4) du bec d'essuyage (3) .

8. Balai d'essuie-glace (2) selon l'une quelconque des revendications 5 et 7, dans lequel ladite au moins une protubérance (10) du raccord d'extrémité (1) comprend en outre au moins un organe de blocage (15) s'étendant dans la cavité (7) et verrouillant le bec d'essuyage (3) à son extrémité longitudinale (4).
